# EUROPÄISCHE PATENTSCHRIFT

(11) **EP 3 709 928 B1**
(45) Veröffentlichungstag und Bekanntmachung des Hinweises auf die Patenterteilung: **15.12.2021**
(21) Anmeldenummer: 18803552.1
(22) Anmeldetag: 24.10.2018
(51) Int. Cl.: A61C 9/00

(54) **VERFAHREN ZUM VIRTUELLEN MODELLIEREN EINES ZAHNBOGENS**
METHOD FOR VIRTUALLY MODELING A DENTAL ARCH
PROCÉDÉ POUR LA MODÉLISATION VIRTUELLE D'UNE ARCADE DENTAIRE

(30) Priorität: 17.11.2017 DE 102017127128
(43) Veröffentlichungstag der Anmeldung: 23.09.2020
(73) Patentinhaber: Gerstenkamp, Gustav, 34346 Hann.Münden (DE)
(72) Erfinder: Gerstenkamp, Gustav, 34346 Hann.Münden (DE)
(74) Vertreter: Schneider, Peter Christian
(86) Internationale Anmeldenummer: PCT/EP2018/079196
(87) Internationale Veröffentlichungsnummer: WO 2019/096555

(56) Entgegenhaltungen:
- WO-A1-2016/110855
- DE-A1-102012 214 470
- US-A1- 2005 153 257
- US-A1- 2007 190 481
- US-A1- 2016 000 526

## Beschreibung

### Gebiet der Erfindung

Die Erfindung betrifft ein Verfahren zum virtuellen Modellieren eines Zahnbogens, bei dem von dem Zahnbogen sowie von einem Referenzkörper mehrere einander überlappende Bilder aus unterschiedlichen Blickwinkeln aufgenommenen werden und aus den aufgenommenen Bildern ein virtuelles, dreidimensionales Zahnbogenmodell berechnet wird, wobei als Referenzkörper ein Teilabdruck des Zahnbogens auf einer mit einem Muster versehenen Abformplatte bekannter Dimensionen verwendet wird.

### Stand der Technik

Ein derartiges Verfahren ist bekannt aus der US 2016/000526 A1.

In der Zahnmedizin, insbesondere der Kieferchirurgie und der Zahnprothetik, werden häufig exakte Zahnbogenmodelle von Patientengebissen benötigt. Der Begriff des Zahnbogens ist im vorliegenden Kontext weit zu verstehen und umfasst nicht nur einen vollständigen *arcus dentalis*, sondern auch Teilbereiche davon. Ebenso bezieht sich der Begriff sowohl auf die reine Zahnanordnung als auch auf die (bezahnten oder unbezahnten) zahntragenden Strukturen.

Physikalische Zahnbogenmodelle sind vielfach die Basis für zahntechnische Anpassungsarbeiten, die auf diese Weise extraoral durchgeführt werden können. Traditionell werden physikalische Zahnbogenmodelle durch Abformen des Zahnbogens und Ausgießen des resultierenden Abdrucks erstellt. Virtuelle Modelle gewinnen jedoch als Vorstufe oder gar Alternative zu physikalischen Modellen zunehmend an Bedeutung.

Beispielsweise kann ein virtuelles Zahnbogenmodell als Basis für den 3D-Druck eines physikalischen Zahnbogenmodells genutzt werden.

Die grundlegende Technik zur Erstellung virtueller, dreidimensionaler Zahnbogenmodelle ist dem Fachmann bekannt und in kommerziell erhältlichen Geräten etabliert und weit verbreitet. Von dem zu modellierenden Zahnbogen werden eine Mehrzahl von Bildern aus unterschiedlichen Blickwinkeln aufgenommen und es wird sodann unter Anwendung etablierter Triangulationsalgorithmen das dreidimensionale, virtuelle Modell errechnet. Die Einzelheiten der verwendeten Algorithmen, die konkrete Parametrisierung der modellierten Oberflächen sowie die Speicher- und Darstellungsformate, die dem Fachmann grundsätzlich bekannt sind, spielen im Kontext der vorliegenden Erfindung keine Rolle.

Zur Erstellung virtueller Zahnbogenmodelle ist es zum einen bekannt, den Zahnbogen selbst intraoral abzubilden. Zum anderen ist es bekannt, zunächst ein vollständiges physikalisches Zahnbogenmodell anzufertigen und dieses dann extraoral abzubilden. So offenbart die eingangs bereits genannte US 2016/000526 A1 die Erstellung virtueller Zahnbogenmodelle des Ober- und des Unterkiefers eines Patienten auf Basis entsprechender physikalischer Zahnbogenmodelle, um sodann anhand der virtuellen Modelle korrekte Okklusions-Relativstellungen der Kiefern zu ermitteln. Ein ähnliches System ist in der US 2007/190481 A1 offenbart. Nachteilig ist in beiden Fällen, dass durch die Zwischenschaltung eines physikalischen Modells ein nicht geringes Fehlerpotential gegeben ist. Diesbezüglich günstiger ist daher prinzipiell die Erstellung eines virtuellen Modells auf Basis einer direkten Intraoralabbildung des Zahnbogens.

Üblicherweise aber ist das Bildfeld der dabei eingesetzten Intraoralkameras relativ klein, sodass von dem abzubildenden Objekt jeweils nur ein relativ kleiner Ausschnitt aufgenommen werden kann. Es werden daher typischerweise sehr viele, einander bereichsweise überlappende Bilder aufgenommen, die dann im Rahmen der virtuellen Modellierung mit ihren Überlappungsbereichen "übereinander gelegt" werden, um eine durchgehende Abbildung des gesamten interessierenden Bereichs zu generieren. Dieser Ansatz wird allgemein als "Stitching" bezeichnet. Bei jedem einzelnen "Stitching"-Vorgang kommt es zwangsläufig zu geringfügigen Fehlern, die unter anderem durch die endliche Pixelgröße der verwendeten Kameras bedingt sind. Man spricht hier von sogenannten Registrierungsfehlern. Insbesondere bei der Modellierung großer Bereiche, beispielsweise eines vollständigen Zahnbogens, können sich diese Registrierungsfehler zu Größenordnungen von mehreren 100 Mikrometern aufsummieren, sodass bestimmte Dimensionen des virtuellen Modells, beispielsweise der Abstand zwischen zwei einander gegenüberliegenden Molaren, im genannten Maß von den wahren Dimensionen abweichen. Abweichungen dieser Größenordnung sind aus medizinischer Sicht als Basis für zahntechnische, insbesondere für sog. umlaufende zahntechnische Arbeiten nicht tolerierbar.

Aus der WO 03/100 729 A1 ist es bekannt, an dem zu modellierenden Zahnbogen Referenzkörper exakt bekannter Dimensionen zu installieren und diese gemeinsam mit dem Zahnbogen abzubilden und virtuell zu modellieren. Dabei kann das Modell so korrigiert werden, dass die modellierten Dimensionen der Referenzkörper exakt deren bekannten, wahren Dimensionen entsprechen, wobei bei Anwendung geeigneter Inter- und Extrapolations-Algorithmen zugleich eine entsprechende Korrektur der modellierten Zahnbogendimensionen erfolgt. Nachteilig bei diesem System ist die Notwendigkeit, besagte Referenzkörper intraoral zu installieren, was die gesamte Prozedur aufwendig und für den Patienten unangenehm macht. Die genannte Druckschrift schlägt daher als eine Abwandlung des Verfahrens vor, den zu modellierenden Zahnbogen in üblicher Weise vollständig abzuformen, den Abdruck auszugießen und die Referenzkörper an dem resultierenden, physikalischen Modell zu installieren, das dann repräsentativ für den eigentlichen Zahnbogen abgebildet und virtuell modelliert wird. Dieser Ansatz erscheint jedoch zumindest in denjenigen Fällen, in denen auf ein physikalisches Modell verzichtet oder aber ein virtuelles Modell als Basis für ein physikalisches Modell dienen soll, wenig zielführend. Hinzu kommt, dass im virtuellen Modell stets auch die Referenzkörper selbst enthalten sind und nachträglich herausgerechnet werden müssen. Das führt zu weiteren Ungenauigkeiten, insbesondere dort, wo ein installierter Referenzkörper Strukturdetails des Zahnbogens bzw. des physikalischen Modells verdeckt.

Eine Alternative bildet der in der DE 10 2014 102 770 A1 offenbarte Ansatz. Auch hier erfolgt notwendig der vollständige Abdruck der interessierenden Gebissbereiche im Registrat einer Bissgabel. Anstelle des Zahnbogens selbst oder eines auf Basis der Impressionen im Registrat gefertigten, physikalischen Modells sind es im Rahmen dieses Ansatzes die Impressionen im Registrat, die mittels eines Scanners erfasst und als Basis des zu berechnenden, virtuellen Zahnbogenmodells genutzt werden. Natürlich besteht auch hier grundsätzlich das oben geschilderte Problem der Fehleraddition beim "Stitching". Dem wird in der genannten Druckschrift dadurch begegnet, dass die Bissgabel mit eindeutig identifizierbaren Referenzmarkierungen ausgestattet ist, deren Relativpositionen bekannt und auf die aufgenommene Teilbilder, die sowohl Teile der Impressionen als auch Teile der Markierungen zeigen, referenziert werden können. Zusätzlich offenbart die genannte Druckschrift auch die Möglichkeit, weitere Absolut-Positionsmarker an der Bissgabel anzubringen, die zum Zeitpunkt des Einbringen der Impressionen in das Registrat, d.h. wenn der Patient in das Registrat der Bissgaben beißt, eine Positionsbestimmung der Bissgabel relativ zu einem absoluten Koordinatensystem erlauben, relativ zu welchem auch der Kopf des Patienten in bekannter (weil gemessener) Weise positioniert ist. Auf diese Weise wird es möglich, das virtuelle Modell auf das absolute Koordinatensystem und daher auf spezielle Anatomiemerkmale am Kopf des Patienten zu referenzieren. Dies ist von besonderer Bedeutung, wenn dynamische Vorgänge, wie z.B. die Relativbewegung von Ober- und Unterkiefer, simuliert werden sollen. Diese Möglichkeit spielt im Kontext der vorliegenden Erfindung jedoch keine Rolle.

Auch die DE 20 2015 105 356 U1 und die DE 10 2011 005 802 A1 verfolgen grundsätzliche ähnliche Ansätze, bei denen ausschließlich die Impressionen im Registrat einer Bissgabel bilderfassend gescannt werden. Auch die US 2005/0153257 1 offenbart ein ähnliches System. Diese Ansätzen haben den Nachteil gemein, dass die Genauigkeit des virtuellen Modells darunter leidet, dass nicht das interessierende Objekt als solches, d.h. der Zahnbogen selbst, sondern ein ggf. fehlerhaft geschaffenes Stellvertreter-Objekt, nämlich die Impressionen im Registrat, gescannt und als Grundlage des virtuellen Modells genutzt wird.

Die WO 2016/110855 A1 offenbart ein Verfahren mit dem Ziel der Erschaffung eines (endgültigen) virtuellen Zahnbogenmodells durch Korrektur eines vorläufigen virtuellen Zahnbogenmodells anhand eines virtuellen Referenzmodells. Das vorläufige Zahnbogenmodell wird auf Basis eines ersten Intraoralscans berechnet. Das Referenzmodell wird auf Basis eines zweiten Intraoralscans ermittelt, bei dem ein in seinen Dimensionen bekannter Fiducial-Marker an korrespondierende Strukturen des Zahnbogens angelegt und mit diesem gemeinsam gescannt wird. Aus der Bekanntheit der Marker-Positionen kann auf die wahren Relativpositionen der mitgescannten, korrespondierenden Zahnbogenstrukturen geschlossen werden. Diese werden sodann im vorläufigen Zahnbogenmodell identifiziert und das gesamte vorläufige Zahnbogenmodell so korrigiert, das besagte korrespondierende Zahnbogenstrukturen zueinander die besagten wahren Relativpositionen einnehmen. Nachteilig ist die hohe Belastung des Patienten, nämlich insbesondere mit zwei Intraoralscans und der temporären Fixierung des Fiducial-Markers. am Zahnbogen.

### Aufgabenstellung

Es ist die Aufgabe der vorliegenden Erfindung, ein gattungsgemäßes Verfahren zum virtuellen Modellieren eines Zahnbogens präziser und für den Patienten weniger unangenehm zu gestalten.

### Darlegung der Erfindung

Diese Aufgabe wird in Verbindung mit den Merkmalen des Oberbegriffs von Anspruch 1 dadurch gelöst, dass
- aus intraoral aufgenommenen Bildern des Zahnbogens ein virtuelles dreidimensionales vorläufiges Zahnbogenmodell berechnet wird,
- aus extraoral aufgenommenen Bildern des Referenzkörpers ein virtuelles, dreidimensionales Referenzmodell berechnet wird und
- zur Schaffung des Zahnbogenmodells die Dimensionen des vorläufigen Zahnbogenmodells korrigiert werden anhand von im Referenzmodell realisierten Dimensionen solcher Strukturmerkmale, die sowohl im vorläufigen Zahnbogenmodell als auch im Referenzmodell vorhanden sind.

Bevorzugte Ausführungsformen der Erfindung sind Gegenstand der abhängigen Ansprüche.

Der Grundgedanke der Erfindung ist es, die für die virtuelle Modellierung notwendige Abbildung von Zahnbogen einerseits und Referenzkörper andererseits räumlich (und vorzugsweise auch zeitlich) zu trennen.

Die Abbildung des Zahnbogens erfolgt intraoral. Es wird also das zu modellierende Objekt unmittelbar selbst abgebildet, was Fehler, die im Rahmen von Zwischenschritten auftreten könnten, ausschließt. Andererseits ist die Abbildung des Zahnbogens mittels einer Intraoralkamera ein für den Patienten wenig unangenehmer, minimalinvasiver Eingriff.

Die Abbildung des Referenzkörpers erfolgt hingegen extraoral. Insbesondere ist es nicht erforderlich, den Referenzkörper am Zahnbogen selbst zu fixieren. Die exakten Dimensionen des Referenzkörpers ergeben sich aus dem (in seinen Dimensionen) bekannten Muster der Abformplatte. Das Muster ist bevorzugt nicht-periodisch, sodass jeder auf irgendeinem Bild eines Teilbereichs des Referenzkörpers abgebildete Musterausschnitt eindeutig identifiziert werden kann. Bekanntheit der Abformplatte bzw. ihres Musters bedeutet insbesondere, dass der Abstand jedes Musterabschnitts von jedem anderen Musterabschnitt bekannt bzw. aus bekannten Informationen ermittelbar ist. Können also - aufgrund der Nicht-Periodizität - alle abgebildeten Musterausschnitte eindeutig identifiziert und damit lokalisiert werden, so können auch ihre Abstände untereinander und damit die Abstände zwischen den gemeinsam mit dem Muster abgebildeten, benachbarten Bereiche des Teilabdrucks bestimmt werden.

Grundsätzlich möglich ist auch die Verwendung eines periodischen Musters. Dann sollte allerdings bei der Abbildung des Referenzkörpers die gesamte Abformplatte abgebildet werden, damit jede einzelne Musterposition eindeutig identifiziert werden kann - quasi durch "Abzählen" der Perioden, ausgehend von einem identifizierbaren Startpunkt. Bei der bevorzugten Verwendung eines nicht-periodischen Musters kann hingegen die Abbildung isolierter Ausschnitte der Abformplatte genügen. Dieser Vorzug wirkt sich insbesondere bei weiter unten noch näher beschriebenen Ausführungsformen, bei denen auch der Teilabdruck nur isolierte Bereiche umfasst, besonders vorteilhaft aus.

Die Abbildungen des Teilabdrucks auf der Abformplatte bilden ihrerseits die Schnittstelle zu den Abbildungen des eigentlichen Zahnbogens, da sie ja das exakte Negativ bestimmter Teilbereiche des Zahnbogens darstellen. In den Abbildungen des Zahnbogens können also diejenigen Bereiche identifiziert werden, die im Referenzkörper durch den Teilabdruck repräsentiert sind und deren Abstände voneinander aufgrund des Musters exakt ermittelt werden können. Diese exakt ermittelten Abstände lassen sich dann auf das virtuelle Zahnbogenmodell übertragen, sodass Registrierungsfehler, die bei dessen Berechnung aufgetreten sind, korrigiert werden können. Zugleich ist es nicht erforderlich, einen für den Patienten unangenehmen und großes technisches Können erfordernden Vollabdruck des Zahnbogens anzufertigen. Vielmehr genügt die einfache und für den Patienten wenig belastende Anfertigung eines flachen Teilabdrucks, z.B. mit einem scanbaren Bissregistratmaterial.

Das erfindungsgemäße Verfahren liefert also eine besonders hohe Dimensionstreue des virtuellen Modells, insbesondere eine Korrektur (bzw. - von diesem Begriff mit umfassteine Vermeidung) von Registrierungsfehlern und minimiert zugleich die Belastung für den Patienten.

Bei einer bevorzugten Ausführung wird das erfindungsgemäße Verfahren im Detail ausgeführt, indem
- aus den intraoral aufgenommenen Bildern des Zahnbogens ein virtuelles, dreidimensionales vorläufiges Zahnbogenmodell berechnet wird,
- aus den extraoral aufgenommenen Bildern des Referenzkörpers - vorzugsweise unter räumlicher Invertierung - ein virtuelles, dreidimensionales Referenzmodell berechnet wird und
- zur Schaffung des (endgültigen) Zahnbogenmodells die Dimensionen des vorläufigen Zahnbogenmodells korrigiert werden anhand von im Referenzmodell realisierten Dimensionen solcher Strukturmerkmale, die sowohl im vorläufigen Zahnbogenmodell als auch im Referenzmodell vorhanden sind.

Mit anderen Worten werden also zunächst unabhängig voneinander ein vorläufiges Zahnbogenmodell (nämlich auf Basis der intraoral aufgenommenen Zahnbogenbilder) sowie ein Referenzmodell (auf Basis der extraoral aufgenommenen Referenzkörperbilder) berechnet. Das vorläufige Zahnbogenmodell enthält sämtliche Strukturdetails des Zahnbogens, aber zugleich den oben erläuterten Registrierungsfehler. Das Referenzmodell ist hingegen in dimensionaler Hinsicht korrekt; allerdings enthält es lediglich wenige Strukturdetails. In einem Korrekturschritt werden beide Modelle virtuell "übereinander gelegt", wobei das vorläufige Zahnbogenmodell so gestaucht, gestreckt und/oder tordiert wird, dass die in beiden Modellen enthaltenen Strukturdetails in Position und Orientierung präzise übereinstimmen. Es kann dann davon ausgegangen werden, dass auch die zwischen diesen Stützpunkten liegenden und nur im vorläufigen Zahnbogenmodell enthaltenen Strukturdetails ebenfalls korrekt positioniert und orientiert sind. Das resultierende, endgültige Zahnbogenmodell zeichnet sich durch besonders hohen Detailreichtum und besonders hohe Dimensionstreue aus.

Wie erwähnt enthält das Referenzmodell die benötigte, präzise Dimensionsinformation, nämlich auf der Basis des präzise bekannten Musters auf der Abformplatte. Die Dimensionen des Teilabdrucks hingegen, an denen, wie oben erläutert, die eigentliche Korrektur des vorläufigen Zahnbogenmodells angelehnt ist, sind *a priori* nicht bekannt. Insbesondere unterliegt die Berechnung eines Modells des Referenzkörpers grundsätzlich demselben Registrierungsfehler wie die Berechnung eines Modells jedes beliebigen sonstigen Körpers, insbesondere des Zahnbogens. Um zu einem im Rahmen des erfindungsgemäßen Verfahrens einsetzbaren Referenzmodell mit präzise bekannten Dimensionen des Teilabdrucks zu gelangen, sind unterschiedliche Wege denkbar. Bevorzugt ist vorgesehen, dass
- aus den Bildern des Referenzkörpers zunächst ein vorläufiges Referenzmodell berechnet wird und
- zur Schaffung des (endgültigen) Referenzmodells die Dimensionen des vorläufigen Referenzmodells korrigiert werden anhand von in einem hinterlegten, virtuellen, dreidimensionalen Plattenmodell der Abdruckplatte realisierten Dimensionen solcher Mustermerkmale, die sowohl im vorläufigen Referenzmodel als auch im Plattenmodell vorhanden sind.

Mit anderen Worten werden also auch hier zunächst zwei Modelle berechnet. Das vorläufige Referenzmodell unterliegt dem Registrierungsfehler; es enthält jedoch sämtliche Strukturdetails des Teilabdrucks sowie der Abformplatte, insbesondere deren Muster. Das Plattenmodell der Abdruckplatte unterliegt hingegen keinem Registrierungsfehler. Beispielsweise kann es auf Basis einer mit speziellen Messmaschinen durchgeführten Präzisionsmessung beruhen. Allerdings enthält es keine Strukturinformationen über den Teilabdruck, sondern lediglich die (dimensionstreuen) Strukturdetails der Abformplatte, insbesondere deren Musters. In einem Korrekturschritt werden dann die beiden Modelle "übereinander gelegt", wobei das vorläufige Referenzmodell derart gestaucht, gestreckt und/oder tordiert wird, dass die in ihm enthaltenen Musterdetails präzise mit den Musterdetails des Plattenmodells übereinstimmen. Es kann dann damit gerechnet werden, dass auch die Strukturdetails der im Plattenmodell nicht enthaltenen Strukturen, d.h. insbesondere die Strukturen des Teilabdrucks, ebenfalls präzise positioniert und orientiert sind. Dieses korrigierte Modell kann dann als das (endgültige) Referenzmodell für die oben erläuterte Korrektur des vorläufigen Zahnbogenmodells genutzt werden.

Wie erläutert, ist die Nicht-Periodizität des Musters auf der Abformplatte günstig für die Effizienz des erfindungsgemäßen Verfahrens. Bei einer besonders vorteilhaften Ausführungsform besteht das Muster der Abformplatte sogar aus statistisch verteilten Musterelementen. Es ist insbesondere nicht erforderlich, das Muster nach einem irgendwie gearteten (nicht-periodischen) Schema zu gestalten. Wesentlich ist die präzise Kenntnis des realisierten Musters, nicht jedoch die Kenntnis des Weges seiner Erzeugung. Gleichwohl können derartige Zusatzinformationen über ein Erzeugungsschema genutzt werden, beispielsweise für die Definition des oben erläuterten Plattenmodells, welches bei Kenntnis des Herstellungsschemas auch auf rein theoretischem Wege ohne die oben erwähnte Präzisionsmessung generiert werden kann.

Vorteilhafterweise ist das Muster der Abformplatte als ein Relief ausgebildet. Die Modellierungsalgorithmen müssen bei diesem Ansatz nicht qualitativ zwischen Musterdetails und Teilabdruckdetails unterscheiden. Die im Rahmen der Modellierung erforderlichen Berechnungen gestalten sich dadurch einfacher als in - durchaus auch realisierbaren - Fällen, in denen das Muster rein optischer Natur ist.

Im Kontext eines reliefartigen Musters hat es sich als besonders vorteilhaft erwiesen, wenn das Relief Kugelsegmente unterschiedlicher Radien und/oder unterschiedlicher Höhen aufweist. Kugelsegmente sind leicht herstellbare Musterelemente, die insbesondere keine Hinterschneidungen oder gegenseitige Abdeckungen enthalten, sodass ihre bildliche Erfassung und ihre virtuelle Modellierung besonders einfach und lückenlos durchgeführt werden kann. Mit den Parametern "Segmenthöhe" und "Radius" stehen zudem zwei zusätzliche Kriterien für die Mustergenerierung mit eindeutig lokalisierbaren Musterausschnitten zur Verfügung.

Der Teilabdruck auf der Abformplatte besteht vorzugsweise aus mehreren gleichzeitig abgeformten, isoliert auf der Abdruckplatte angeordneten Teilabdruckelementen. Diese Teilabdruckelemente dienen als Stützstellen für nachfolgende Berechnungen. Zwischen ihnen bleibt aber die Abformplatte und insbesondere deren Muster für die Bildaufnahme erkennbar. Je mehr Strukturdetails der Teilabdruckelemente in unmittelbarer Nachbarschaft zu Strukturdetails des Musters gemeinsam auf je einem Bild abgebildet werden können, desto präziser lässt sich die Position und Orientierung der Strukturdetails der Teilabdruckelemente modellieren, d. h. desto präziser ist das Referenzmodell.

Wie oben bereits erwähnt, kann die Herstellung des Referenzkörpers sehr einfach und wenig belastend für den Patienten erfolgen. Bevorzugt ist vorgesehen, dass zur Herstellung des Referenzkörpers ein die bereichsweise mit verformbarer Abformmasse belegte Abformplatte umfassender Abformkörper aus okklusaler Richtung gegen den Zahnbogen gepresst wird. Insbesondere wird es als günstig angesehen, wenn der Abformkörper aus der mit der isoliert angeordneten Portionen verformbarer Abformmasse belegten Abformplatte gebildet ist. Dieses Verfahren entspricht im Wesentlich der traditionellen Abformung von Zahnbögen, unterscheidet sich von dieser jedoch durch den deutlich reduzierten Einsatz von Abformmasse. Es werden lediglich an wenigen, isolierten Positionen kleine Portionen von Abformmasse auf der Abformplatte verteilt und dieser Abformkörper kurz auf den Zahnbogen gedrückt. Anders als bei einer vollständigen Abformung lässt sich diese Teilabformung schnell und handwerklich einfach bewältigen und führt aufgrund des deutlich reduzierten Volumens im Vergleich zu einem traditionellen Abformlöffel beim Patienten nicht zu unangenehmen Nebenerscheinungen, wie Würgen etc.

Die Wahl der konkreten Abformmasse ist dem Anwender des erfindungsgemäßen Verfahrens weitgehend freigestellt. Denkbar ist es, eine aushärtende Abformmasse zu verwenden und diese vor dem Aufnehmen der Bilder des Referenzkörpers aushärten zu lassen. Beim Aushärten kann es allerdings zu unerwünschten Schrumpfungen und damit zu Dimensionsfehlern kommen. Da der Teilabdruck im Rahmen des erfindungsgemäßen Verfahrens jedoch keiner mechanischen Belastung ausgesetzt, sondern rein optisch abgebildet wird, ist es ebenso möglich, eine dauerelastische Abformmasse zu verwenden. Eine solche lässt sich nach Durchführung des erfindungsgemäßen Verfahrens in der Regel auch einfacher wieder von der Abformplatte entfernen, die sodann für die Herstellung eines neuen Referenzkörpers zur Verfügung steht.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: einen ersten Schritt einer bevorzugten Ausführungsform des erfindungsgemäßen Verfahrens,
- Figur 2:: einen zweiten Schritt einer bevorzugten Ausführungsform des erfindungsgemäßen Verfahrens,
- Figur 3:: einen dritten Schritt einer bevorzugten Ausführungsform des erfindungsgemäßen Verfahrens,
- Figur 4:: einen vierten Schritt einer bevorzugten Ausführungsform des erfindungsgemäßen Verfahrens,
- Figur 5:: einen fünften Schritt einer bevorzugten Ausführungsform des erfindungsgemäßen Verfahrens,
- Figur 6:: einen sechsten Schritt einer bevorzugten Ausführungsform des erfindungsgemäßen Verfahrens,
- Figur 7:: einen ersten Schritt einer besonders vorteilhaften Weiterbildung des erfindungsgemäßen Verfahrens,
- Figur 8:: einen zweiten Schritt einer besonders vorteilhaften Weiterbildung des erfindungsgemäßen Verfahrens sowie
- Figur 9:: einen dritten Schritt einer besonders vorteilhaften Weiterbildung des erfindungsgemäßen Verfahrens.

### Beschreibung bevorzugter Ausführungsformen

Gleiche Bezugszeichen in den Figuren deuten auf gleiche oder analoge Elemente hin.

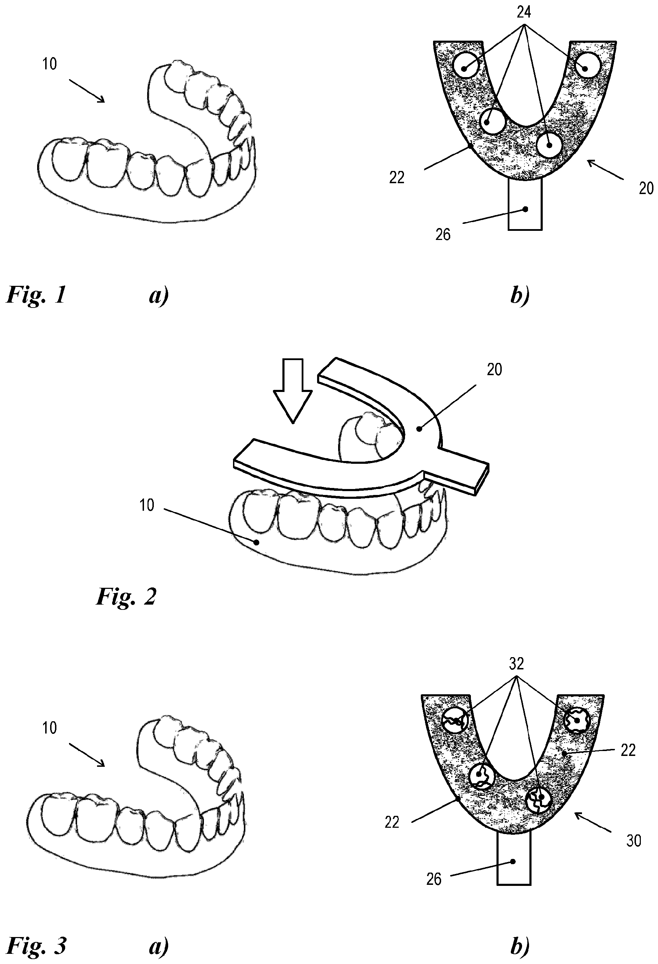

Die Figuren 1 bis 6 zeigen eine vorteilhafte Ausführungsform eines erfindungsgemäßen Verfahrens zur virtuellen Modellierung eines Zahnbogens 10. In Teilfigur 1a ist der Zahnbogen 10 isoliert dargestellt. Dies dient jedoch allein der Übersichtlichkeit der Zeichnungen. Das erfindungsgemäße Verfahren bezieht sich insbesondere auf die Modellierung eines Zahnbogens 10 *in situ.* Teilfigur 1b zeigt einen Abformkörper 20, wie er bevorzugt im Kontext des erfindungsgemäßen Verfahrens eingesetzt wird. Der Abformkörper 20 besteht aus einer Abformplatte 22, die ein nicht-periodisches, reliefartiges Muster trägt, das vorzugsweise aus statistisch verteilten Musterelementen, besonders bevorzugt aus Kugelsegmenten unterschiedlicher Radien und/oder unterschiedlicher Höhen besteht. Auf der Abformplatte 22 sind mehrere - in Teilfigur 1b vier - Portionen 24 verformbarer Abformmasse isoliert voneinander positioniert. Ein Griff 26 an der Abformplatte 22 erleichtert die Handhabung des Abformkörpers 20.

Wie in Figur 2 angedeutet, wird der Abformkörper 20 aus koronaler Richtung auf den Zahnbogen 10 gedrückt und wieder abgehoben.

Zu Beginn des eigentlichen Modellierungsverfahrens stehen somit, wie in Figur 3 dargestellt, der zu modellierende Zahnbogen 10 (Teilfigur 1a) sowie ein Referenzkörper 30 (Teilfigur 1b) zur Verfügung. Letzterer umfasst im Wesentlichen die Abformplatte 22 und einen Teilabdruck 32 des Zahnbogens 10, wobei der Teilabdruck 32 das Negativ des Zahnbogens 10 in denjenigen Bereichen darstellt, in denen die Abformmasse 24 während des Abformschrittes von Figur 2 in Kontakt mit dem Zahnbogen 10 war.

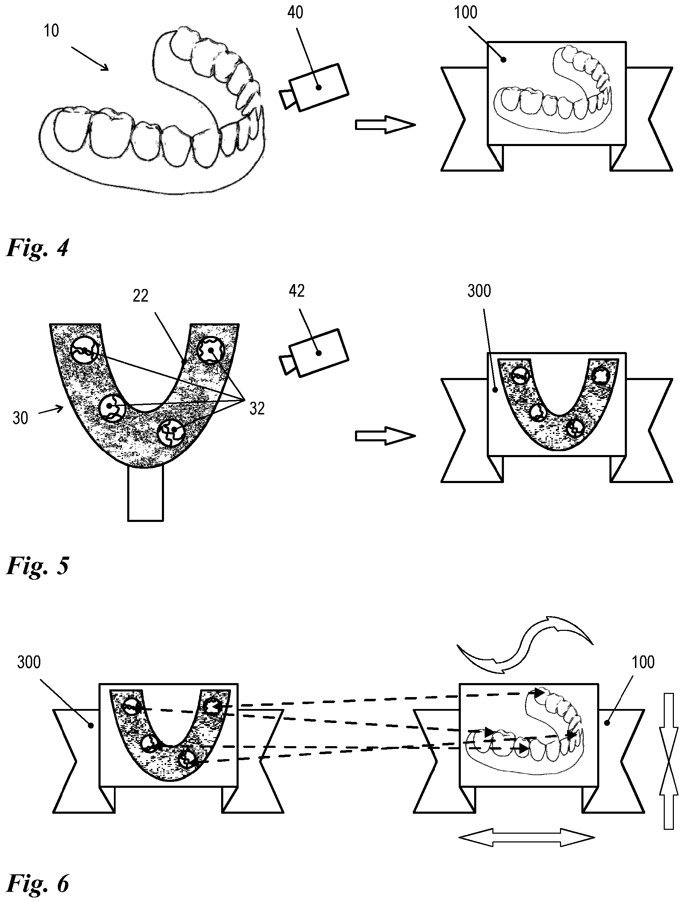

Im Folgenden, in Figur 4 gezeigten Schritt werden mittels einer Intraoralkamera 40 einander überlappende Bilder des Zahnbogens 10 aus unterschiedlichen Blickrichtungen aufgenommen. Hieraus wird in üblicher Weise, vorzugsweise durch "Stitching", ein dreidimensionales, virtuelles Modell des Zahnbogens 10 errechnet, welches hier als vorläufiges Zahnbogenmodell 100 bezeichnet wird. Das vorläufige Zahnbogenmodell 100 enthält die bei solchen Modellierungsverfahren unvermeidlichen Registrierungsfehler.

In dem in Figur 5 dargestellten Schritt, der vor, nach oder gleichzeitig zu dem in Figur 4 dargestellten Schritt durchgeführt werden kann, wird der Referenzkörper 30 mittels einer Extraoralkamera 42 abgebildet. Bei der Extraoralkamera 42 kann es sich um dasselbe Gerät wie bei der Intraoralkamera 40 handeln, wobei es jedoch in einem Fall intraoral und im anderen Fall extraoral benutzt wird. Auch hier werden eine Vielzahl von einander überlappenden Bildern aus unterschiedlichen Blickrichtungen aufgenommen. Insbesondere werden sowohl der Teilabdruck 32 als auch das Muster der Abformplatte 22 aufgenommen. Das Muster der Abformplatte 22 ist im Detail bekannt. Daher kann ein Referenzmodell 300, welches aus den aufgenommenen Bildern des Referenzkörpers 30 errechnet wird, exakt dimensionstreu gestaltet werden.

In dem in Figur 6 dargestellten, abschließenden Schritt erfolgt sodann eine Korrektur des vorläufigen Zahnbogenmodells 100 durch Vergleich mit dem Referenzmodell 300. Insbesondere wird das vorläufige Zahnbogenmodell 100 rechnerisch derart gestaucht, gestreckt und/oder tordiert, dass Bereiche des vorläufigen Zahnbogenmodells 100, die mit Teilabdruck-Bereichen des Referenzmodells 300 korrespondieren, hinsichtlich ihrer Position und Orientierung an letztere angepasst werden. Auf diese Weise kann der Registrierungsfehler im vorläufigen Zahnbogenmodell 100 korrigiert und ein exakt dimensionstreues, endgültiges Zahnbogenmodell (in den Figuren nicht gesondert dargestellt) erzeugt werden. Dieses kann sodann Grundlage weiterer zahnärztlicher oder zahntechnischer Maßnahmen sein. Beispielsweise kann es dem 3D-Druck eines dimensionstreuen physikalischen Zahnbogenmodells dienen, auf welchem dann selbst umlaufender Zahnersatz präzise hergestellt werden kann. Alternativ kann das dimensionstreue virtuelle Zahnbogenmodell direkt zur Herstellung von (umlaufenden) Zahnersatz eingesetzt werden.

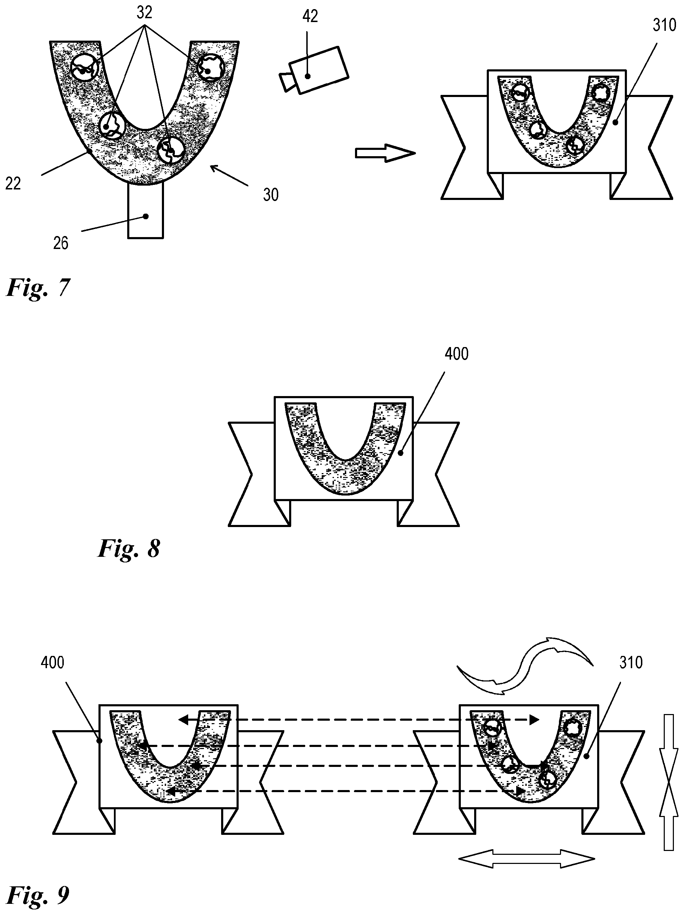

Die Figuren 7 bis 9 skizzieren besonders bevorzugte Schritte zur Erstellung des dimensionstreuen Referenzmodells 30. Wie in Figur 7 dargestellt, wird hierzu der Referenzkörper 30 mittels einer Extraoralkamera 42 abgebildet und hieraus mit üblichen Modellierungsverfahren ein vorläufiges Referenzmodell 310 errechnet. Dieses vorläufige Referenzmodell 310 unterliegt noch dem bei üblichen Modellierungsverfahren unvermeidlichen Registrierungsfehler.

Gemäß Figur 8 wird jedoch ein exaktes Plattenmodell 400 der Abformplatte 22 bereitgestellt. Dieses kann mittels einer Präzisions-Messmaschine erstellt werden, die keinen nennenswerten Registrierungsfehler erzeugt. Derartige Präzisions-Messmaschinen sind dem Fachmann bekannt. Insbesondere durch Aufnahme sehr großer Bilder, die die gesamte Abformplatte 22 abbilden und auf ein "Stitching" verzichten können, kann dabei der Registrierungsfehler vermieden werden. Derartige Präzisions-Messmaschinen sind jedoch teuer und hochkomplex in der Bedienung und stehen typischerweise in zahnärztlichen oder zahntechnischen Laboren nicht zur Verfügung. Die bei Durchführung des erfindungsgemäßen Verfahrens eingesetzten, gemusterten Abformplatten sollten daher vorzugsweise bereits vom Hersteller vermessen und gemeinsam mit einem das dimensionstreue Plattenmodell 400 repräsentierenden Datensatz ausgeliefert werden.

Analog zum Vergleichsschritt von Figur 5 kann dann, wie in Figur 9 dargestellt, ein Vergleich des vorläufigen Referenzmodells 310 mit dem dimensionstreuen Plattenmodell 400 erfolgen. Dabei wird das vorläufige Referenzmodell 310 derart gestaucht, gestreckt und/oder tordiert, dass die in beiden Modellen modellierten Musterbereiche exakt übereinstimmen. Auf diese Weise wird das endgültige Referenzmodell 300 erzeugt, welches als dimensionstreues Referenzmodell 300 im Vergleichsschritt von Figur 6 eingesetzt werden kann.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere können die hier als einzelne Schritte beschriebenen, funktionalen Verfahrensstufen bei Anwendung geeigneter Algorithmen wenigstens teilweise gemeinsam ausgeführt werden.

### Bezugszeichenliste

- 10: Zahnbogen
- 20: Abformkörper
- 22: Abformplatte
- 24: Portionen von Abformmasse
- 26: Griff
- 30: Referenzkörper
- 32: Teilabdruck
- 40: Intraoralkamera
- 42: Extraoralkamera
- 100: vorläufiges Zahnbogenmodell
- 300: Referenzmodell
- 310: vorläufiges Referenzmodell
- 400: Plattenmodell

## Patentansprüche

1. Verfahren zum virtuellen Modellieren eines Zahnbogens (10), bei dem von dem Zahnbogen (10) sowie von einem Referenzkörper (30) mehrere einander überlappende Bilder aus unterschiedlichen Blickwinkeln aufgenommenen werden und aus den aufgenommenen Bildern ein virtuelles, dreidimensionales Zahnbogenmodell berechnet wird,
wobei als Referenzkörper (30) ein Teilabdruck (32) des Zahnbogens (10) auf einer mit einem Muster versehenen Abformplatte (22) bekannter Dimensionen verwendet wird,
**dadurch gekennzeichnet, dass**
- aus intraoral aufgenommenen Bildern des Zahnbogens (10) ein virtuelles, dreidimensionales vorläufiges Zahnbogenmodell (100) berechnet wird,
- aus extraoral aufgenommenen Bildern des Referenzkörpers (30) ein virtuelles, dreidimensionales Referenzmodell (300) berechnet wird und
- zur Schaffung des Zahnbogenmodells die Dimensionen des vorläufigen Zahnbogenmodells (100) korrigiert werden anhand von im Referenzmodell (300) realisierten Dimensionen solcher Strukturmerkmale, die sowohl im vorläufigen Zahnbogenmodell (100) als auch im Referenzmodell (300) vorhanden sind.

2. Verfahren nach Anspruch 1,
**dadurch gekennzeichnet,**
**dass** das Muster ein nicht-periodisches Muster ist.

3. Verfahren nach einem der vorangehenden Ansprüche,
**dadurch gekennzeichnet, dass**
- aus den Bildern des Referenzkörpers (30) zunächst ein vorläufiges Referenzmodell (310) berechnet wird und
- zur Schaffung des Referenzmodells (300) die Dimensionen des vorläufigen Referenzmodells (310) korrigiert werden anhand von in einem hinterlegten, virtuellen, dreidimensionalen Plattenmodell (400) der Abdruckplatte (22) realisierten Dimensionen solcher Mustermerkmale, die sowohl im vorläufigen Referenzmodell (310) als auch im Plattenmodell (400) vorhanden sind.

4. Verfahren nach einem der vorangehenden Ansprüche,
**dadurch gekennzeichnet,**
**dass** das Muster der Abformplatte (22) aus statistisch verteilten Musterelementen besteht.

5. Verfahren nach einem der vorangehenden Ansprüche,
**dadurch gekennzeichnet,**
**dass** das Muster der Abformplatte (22) als ein Relief ausgebildet ist.

6. Verfahren nach Anspruch 5,
**dadurch gekennzeichnet,**
**dass** das Relief Kugelsegmente unterschiedlicher Radien und/oder unterschiedlicher Höhen aufweist.

7. Verfahren nach einem der vorangehenden Ansprüche,
**dadurch gekennzeichnet,**
**dass** der Teilabdruck (32) aus mehreren gleichzeitig abgeformten, isoliert auf der Abdruckplatte angeordneten Teilabdruckelementen besteht.

8. Verfahren nach einem der vorangehenden Ansprüche,
**dadurch gekennzeichnet,**
**dass** zur Herstellung des Referenzkörpers (30) ein die bereichsweise mit verformbarer Abformmasse (24) belegte Abformplatte (22) umfassender Abformkörper (20) aus okklusaler Richtung gegen den Zahnbogen (10) gepresst wird.

9. Verfahren nach Anspruch 8,
**dadurch gekennzeichnet,**
**dass** der Abformkörper (20) die mit isoliert angeordneten Portionen verformbarer Abformmasse (24) belegte Abformplatte (22) umfasst.

## Claims

1. A method for virtually modeling a dental arch (10), wherein a plurality of overlapping images of the dental arch (10) and of a reference body (30) is captured from different angles of view and a virtual, three-dimensional dental arch model is computed from the captured images,
wherein a partial impression (32) of the dental arch (10) on an impression plate (22) of known dimensions is used as the reference body (30), which impression plate is provided with a pattern.
**characterized in that**
- a virtual, three-dimensional, preliminary dental arch model (100) is computed from images of the dental arch (10) captured intraorally,
- a virtual, three-dimensional reference model (300) is computed from images of the reference body (30) captured extraorally, and
- to create the dental arch model, the dimensions of the preliminary dental arch model (100) are corrected based on the dimensions of those structural features, realized in the reference model (300), which are present both in the preliminary dental arch model (100) as well as in the reference model (300).

2. The method according to claim 1,
**characterized in that**
the pattern is a non-periodic pattern.

3. The method according to any one of the preceding claims,
**characterized in that**
- a preliminary reference model (310) is first computed from the images of the reference body (30), and
- to create the reference model (300), the dimensions of the preliminary reference model (310) are corrected based on realized dimensions of those pattern features from a saved, virtual, three-dimensional plate model (400) of the impression plate (22) that are present in both the preliminary reference model (310) as well as in the plate model (400).

4. The method according to any one of the preceding claims,
**characterized in that**
the pattern of the impression plate (22) is composed of statistically distributed pattern elements.

5. The method according to any one of the preceding claims,
**characterized in that**
the pattern of the impression plate (22) is structured as a relief.

6. The method according to claim 5,
**characterized in that**
the relief has ball segments of differing radii and/or differing heights.

7. The method according to any one of the preceding claims,
**characterized in that**
the partial impression (32) is composed of a plurality of simultaneously impressed partial impression elements that are arranged in isolated fashion on the impression plate.

8. The method according to any one of the preceding claims,
**characterized in that**,
to produce the reference body (30), an impression body (20) comprising the impression plate (22) with deformable impression material (24) arranged in sections is pressed against the dental arch (10) from the occlusal direction.

9. The method according to claim 8,
**characterized in that**
the impression body (20) comprises the impression plate (22) which is laden with portions of deformable impression material (24) arranged in isolated fashion.

## Revendications

1. Procédé de modélisation virtuelle d'un arc dentaire (10), dans lequel une pluralité d'images se chevauchant de l'arc dentaire (10) et d'un corps de référence (30) est capturée à partir de différents angles de vue et un modèle d'arc dentaire tridimensionnel virtuel est calculé à partir des images capturées,
dans lequel une empreinte partielle (32) de l'arcade dentaire (10) sur une plaque d'empreinte (22) de dimensions connues est utilisée comme corps de référence (30), laquelle plaque d'empreinte est pourvue d'un motif,
**caractérisé en ce que**
- un modèle virtuel tridimensionnel préliminaire d'arcade dentaire (100) est calculé à partir d'images de l'arcade dentaire (10) capturées par voie intra-orale,
- un modèle de référence tridimensionnel virtuel (300) est calculé à partir d'images du corps de référence (30) capturées de manière extracorporelle et
- pour créer le modèle d'arcade dentaire, les dimensions du modèle préliminaire d'arcade dentaire (100) sont corrigées sur la base des dimensions des caractéristiques structurelles, réalisées dans le modèle de référence (300), qui sont présentes aussi bien dans le modèle préliminaire d'arcade dentaire (100) que dans le modèle de référence (300).

2. Procédé selon la revendication 1,
**caractérisé en ce que**
le motif est un motif non périodique.

3. Procédé selon l'une quelconque des revendications précédentes,
**caractérisé en ce que**
- un modèle de référence préliminaire (310) est d'abord calculé à partir des images du corps de référence (30), et - un modèle de référence préliminaire (310) est calculé à partir des images du corps de référence (30).
- pour créer le modèle de référence (300), les dimensions du modèle de référence préliminaire (310) sont corrigées sur la base des dimensions réalisées de ces caractéristiques de motif à partir d'un modèle de plaque tridimensionnel virtuel sauvegardé (400) de la plaque d'impression (22) qui sont présentes à la fois dans le modèle de référence préliminaire (310) et dans le modèle de plaque (400).

4. Procédé selon l'une quelconque des revendications précédentes,
**caractérisé en ce que**
le motif de la plaque d'impression (22) est composé d'éléments de motif répartis statistiquement.

5. Procédé selon l'une quelconque des revendications précédentes,
**caractérisé en ce que**
le motif de la plaque d'impression (22) est structuré en relief.

6. Procédé selon la revendication 5,
**caractérisé en ce que**
le relief comporte des segments de billes de rayons différents et/ou de hauteurs différentes.

7. Procédé selon l'une quelconque des revendications précédentes,
**caractérisé en ce que**
l'empreinte partielle (32) est composée d'une pluralité d'éléments d'empreinte partielle impressionnés simultanément qui sont disposés de manière isolée sur la plaque d'impression.

8. Procédé selon l'une quelconque des revendications précédentes,
**caractérisé en ce que**,
pour produire le corps de référence (30), un corps d'empreinte (20) comprenant la plaque d'empreinte (22) avec un matériau d'empreinte déformable (24) disposé par sections est pressé contre l'arcade dentaire (10) depuis la direction occlusale.

9. Procédé selon la revendication 8,
**caractérisé en ce que**
le corps d'empreinte (20) comprend la plaque d'empreinte (22) qui est chargée de portions de matériau d'empreinte déformable (24) disposées de manière isolée.
